# EUROPEAN PATENT SPECIFICATION

(11) **EP 3 940 887 B1**
(45) Date of publication and mention of the grant of the patent: **03.12.2025**
(21) Application number: 20185549.1
(22) Date of filing: 13.07.2020
(51) Int. Cl.: H01R 11/18, H01R 11/28, H01M 50/204, H01M 50/503, H01M 50/507, H01M 50/517, H01M 50/519, H01M 50/522, H01M 50/524, H01M 50/552

(54) **AUXILIARY CONNECTOR FOR A BATTERY**
HILFSANSCHLUSS FÜR EINE BATTERIE
CONNECTEUR AUXILIAIRE POUR UNE BATTERIE

(43) Date of publication of application: 19.01.2022
(73) Proprietor: ABERTAX RESEARCH AND DEVELOPMENT LTD., PLA 3000 Paola (MT)
(72) Inventor: Cilia, Joseph, Haz-Zebbug, ZBG 1921 (MT); Merz, Klaus-Dieter, 63654 Büdingen (DE); Tabone, Malcolm, Qormi, QRM 3612 (MT); Schembri, George, Birkirkara, BKR 1262 (MT); Farrugia, Aaron, Iz-Zurrieq, Bubaqra, ZRQ 2500 (MT)
(74) Representative: Diehl & Partner

(56) References cited:
- EP-A1- 2 876 707
- EP-A2- 1 737 072
- US-A- 4 643 511
- US-A- 5 620 338
- US-A1- 2013 196 556
- US-B2- 6 848 922

## Description

The present invention generally relates to a connector for establishing an electrically conductive connection to terminals of battery cells or batteries.

**In** order to prevent corrosion and avoid short-circuits it is known to insulate both the inter-cell battery connectors and the mounting means that are used to connect the inter-cell battery connector to the respective battery cells. An example of such an improved inter-cell battery connector is referred to in the battery industry as *"Perfect Connector".* Said *"Perfect Connector"* is manufactured from copper cable which is provided with metal eyelets on both ends and has been fully encased in acid resistant thermoplastic elastomers except for the middle portion of the eyelets. Furthermore, the *"Perfect Connector"* is provided with a plastic cover covering bolts which are each passing through one of the eyelets and entering into a terminal of a battery cell in order to provide both a mechanical and electrical connection between the connector and the battery cells. These *"Perfect Connectors"* are widely used for inter-cell connections in batteries both for stationary and motive applications. They have been found to offer an ideal solution in sealing against acid-ingress, thus avoiding corrosion within the connection itself. The *"Perfect Connectors"* are bolted with an M10 bolt directly on to the terminals of the battery cells or to battery terminals providing a perfect electrical connection to the respective cells of the battery, while the bottom edge of the *"Perfect Connector"* also seals against the battery lid. The actual bolt is therefore "hidden" within the "Perfect Connector" when the latter is fitted with the cover. This cover also provides for sealing and protection of the electrical connection inside.

During usage of a battery it is often necessary to provide an auxiliary supply of low and medium current from a battery in addition to the supply of full current via the connector that is attached to the terminal of a battery cell or a terminal of the battery. Such an auxiliary supply is referred to as "take-off connection" or "auxiliary connection" in the following. Take-off connections from batteries are always needed where low current applications have to be powered. In this respect, "low current" denotes a current that is about a magnitude smaller than the current that is supplied by the terminal during regular use of the battery. These may be several applications as required in a vehicle or other uses. One particular use is the powering of devices such as Battery Electrolyte Level Sensors or Battery Management Systems (BMS).

A take-off connection which is still being widely used, due to its effectiveness in providing an ideal connection to a battery terminal, while at the same time, providing a very efficient seal between itself and the battery connectors is described in EP 1 737 072 A2 of the applicant. This type of take-off connection is proven to be very successful where normal connectors (and thus connectors different from "Perfect Connectors") are used. That take-off connection comprises a brass ring to which a radial wire is connected. The ring, when in place, is sandwiched between the battery connector and a bolt attaching the connector to a terminal of the battery cell or a terminal of the battery. Attachment of the connector to the terminal using a bolt is allowing for a high current connection between the connector and the terminal. The supply voltage for powering small devices such as an Electrolyte Level Sensor and a BMS is taken from the wire radially connected to the brass ring. This take-off connection is known as *"Washer with Leading Wire - (WLW)".*

The *"Washer with Leading Wire - (WLW)"* was an improvement to a previous application of the applicant known as *"Bolt with Leading Wire"* (German utility model No: DE 20 2005 009 694 U1). This comprised a bolt that had a wire radially fixed to one of its flat sides of its hexagonal head. The low current for any needed device such as a BMS was led through this wire, while the bolt itself (an M10 bolt) was used to tighten the connector to the terminal of a battery cell or battery, thus providing the high-current path.

From a technical point of view, said *"Bolt with Leading Wire"* had some negative aspects, as the wire, fixed to the bolt had obviously to be turned together with the bolt while the latter was being screwed and tightened on to the terminal, sandwiching the battery connector. It also often happened that in the final tightened position of the bolt, the wire was not in the ideal orientation as required. Any device such as a Level sensor or a BMS together with its associated wires and additional accessories had to be also twisted around with the bolt. This impracticability led to the *"Washer with Leading Wire - (WLW)",* whereby the ring, with the leading wire radially attached, is sandwiched and tightened between the bolt and the connector. Here the orientation of the ring and its radial wire could be adjusted to the correct orientation before the tightening of the main connector through screwing of the bolt took place.

US 4,643,511 A discloses a mount for connecting perforated terminal lugs of a pair of cables directly to a battery side terminal having a hole provided with internal screw threads. The mount comprises a stud adapted to extend through the perforation of the lug of one of said cables. The stud includes an element at one end of the stud having external screw threads disposed to mesh with said internal threads, a member intermediate the ends of the stud for clamping said lug of the one cable against said side terminal when the external threads are in mesh with the internal threads, a device at the opposite end of the stud for releasably attaching the lug of the other cable to the stud, and structure for preventing displacement of the stud from the lug of said one cable. Said stud has a socket at said opposite end thereof provided with internal screw threads. Said device being a fastener adapted to extend through the perforation of the lug of the other cable and having external screw threads disposed to mesh with the threads of the socket.

To summarize, document US 4,643,511 A discloses the features of the preamble of independent claim 1.

US 5,620,338 A discloses a universal battery cable assembly. A battery terminal and a conductive spacer are seated in a mold and encased in a quantity of insulating, resilient material that cures to form a boot of uniform size and shape, regardless of whether the battery cable assembly will function as a top terminal or as a bottom terminal, and regardless of the number and sizes of conductors that may be coupled to the battery terminal. A battery cable assembly provided in accordance with the present invention has a repeating geometry that allows it to be stacked on and sealingly engage a second battery cable assembly having the same structure. The battery terminals are stacked over a bolt and attached to each other by a nut attached to the bolt.

Some industrial OEM's in the Battery Industry are using the above described "Perfect Connectors" as preferred connectors, as this type of connector also provides a good sealing solution against acid-ingress to the connection. These "Perfect Connectors" are, however, hindering the use of the *"Washer with Leading Wire - WLW'.*

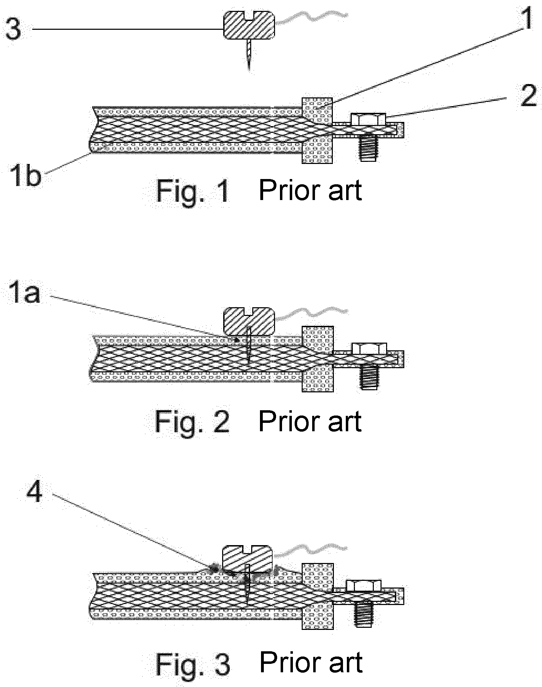

Another type of take-off connection to provide an auxiliary supply of low and medium current from a battery bases on providing an electrical contact to cable connectors between the different cells, as shown in Figures 1, 2 and 3. This take-off connection consists of a metal pin which is mounted in a plastic or insulating housing. This pin-connector-assembly 3, which also has a leading wire that is electrically connected to the metal pin, is mounted directly on a cable 1, linking one cell to another in a battery. These cables 1 are connected to cell terminals (not shown) via an electrically conductive bolt 2, which screws directly on to the cell terminal and is in electrical contact with a copper conductor wire 1b of the cable 1. The pin connector 3 pierces a cable insulation 1a and the copper conductor wire 1b. The pin connector 3 is held in place with a standard cable-tie or strap (not shown). This is a very convenient and quick way of providing a take-off connection from any battery cable 1. However, it has been proven, that this setup is highly prone to corrosion, as it does not offer an efficient sealing between itself and the pierced battery cable 1. **In** the usual battery environment, where battery acid such as Sulfuric Acid is present (also in vapor form), this acid enters into a gap between the pin-connector-assembly 3 and the cable 1, and causes severe corrosion 4. Since the insulation 1a of the cable 1 is pierced, the acid or its vapor are even allowed to find their way to the copper conductor wire 1b within the cable 1. For this reason, this type of take-off connection that pierces the insulation of an electrical conductor is actually a primitive and irresponsible method in the electrical technology practice. There is also a risk of an electric shock to the user especially for voltages above 48 V DC.

EP 2 876 707 A1 discloses an apparatus for connecting between an electrode terminal of a battery module and a terminal capable of electrically connecting the electrode terminal and the terminal to each other by being press-fitted onto an outer side of the electrode terminal protruding outwardly of the battery module. The apparatus for connecting between an electrode terminal of a battery module and a terminal includes a socket terminal inserted and closely adhered onto the outer side of the electrode terminal and a socket coupled and closely adhered onto an outer side of the socket terminal and coupled to the terminal, such that the electrode terminal and the terminal are electrically connected to each other by the socket terminal and the socket. Thus, it is the objective of the present invention to provide an improved battery take-off connector allowing a flexible and secure take-off connection and thus an auxiliary supply of low and medium current in addition to a main current supply provided via the connector itself.

The above objective is solved by the combination of features of the independent claim.

Preferred embodiments are described in the dependent claims.

Embodiments provide a battery take-off connector to be used in conjunction with a battery. The battery take-off connector comprises a plug contact and an insulated wire. The plug contact has two portions at opposite sides of the plug contact, wherein a first portion of the plug contact is adapted to plug to a tool engagement portion of a bolt for tightening a main battery connector to the terminal of a battery cell or a terminal of the battery. The battery terminal is usually forming part of a battery lid and may be belonging to an individual battery cell or the battery as a whole. The insulated wire has as conductor which is electrically connected to a second portion of the plug contact different from the first portion of the plug contact.

Due to the above configuration the battery take-off connector is capable to take-off current from the battery terminal. As a diameter of the conductor of the insulated wire is usually much lower than a diameter of a conductor of a main battery connector, the battery take-off connector is suitable for a current that is lower than the main battery connector.

According to an embodiment (that is not specifically claimed) the insulated wire is electrically connected to the second portion of the plug contact by soldering, welding, screwing or any other means such as crimping, which provides a good electrical connection between the wire and plug contact.

According to an embodiment, the battery take-off connector further comprises a lid of insulating material, the lid comprising a recess, the recess being adapted to receive the second portion of the plug contact together with a portion of the insulated wire. Thus, by using such a lid it is possible to insulate the first portion of the plug contact which is protruding from the tool engagement portion of the bolt, respectively after the plug contact has been plugged to the tool engagement portion of the bolt. This prevents hazard due to electricity and protects the contact against humidity and acid.

According to an embodiment, the first portion of the plug contact provides a pin contact with circular cross section, the pin contact being thus adapted to enter a (circular) drilling in the tool engagement portion of the bolt.

According to an embodiment, the first portion of the plug contact is provided with elastic contact blades, thus providing a connection which is constantly under radial tension due to its springiness and is providing good electrical conductivity between the plug contact and the respective terminal bolt.

According to an embodiment the first portion of the plug contact provides a tube-shaped end portion with circular cross section and is provided with a circular groove on its radial surface area, wherein an electrical-conductive ring spring is fitted into the groove. When the pin contact is inserted in the (circular) drilling (or sleeve insert of the drilling) in the tool engagement portion of the bolt, this spring provides a constant tension and guarantees a good electrical contact while the pin contact is still rotatable about its central axis. According to an embodiment, the drilling (or sleeve insert of the drilling) or in the tool engagement portion of the bolt has a circular groove machined on the inner surface of the drilling (or sleeve insert), thus allowing the ring spring to partially enter this groove as well. **In** consequence, the pin contact is capable to snap into the respective engagement portion.

Embodiments of a set consist of an battery take-off connector as described above, a main battery connector (such as an inter-cell battery connector, for example) and an electrically conductive bolt. The main battery connector being manufactured from copper cable which is provided with a metal eyelet on one or both ends and has been fully encased in acid resistant thermoplastic elastomers. An inter-cell battery connector that can be used as main battery connector is known as *"Perfect Connector"* and described in detail above. The electrically conductive bolt is adapted to the eyelet of the main battery connector and adapted to attach the eyelet to a terminal of a battery cell or a terminal of a battery.

According to an embodiment, the tool engagement portion of the bolt is drilled in its central axis and the first portion of the plug contact provides a pin contact with circular cross section, the pin contact being adapted to enter the drilling in the tool engagement portion of the bolt in sliding fit or press fit. Thus, it is possible to removably attach the plug contact to bolts having e.g. a tool engagement portion with hexagonal cross section. Such kind of bolt is often used together with *"Perfect Connectors".* **In** case the pin contact of the plug contact is further provided with elastic contact blades which collapse radially inwards when the pin contact is inserted into the drilling in the tool engagement portion of the bolt, there is a constant radial tension between the pin contact and the inner wall of the drilling, thus guaranteeing a good electrical connection while it is still possible to rotate the pin contact about its central axis.

According to an embodiment, the set additionally comprises a sleeve insert provided in-between the drilling in the tool engagement portion of the bolt and the contact pin.

According to an embodiment, the acid resistant rubber or soft plastics such as thermoplastic elastomers encasing the main battery connector provide a cup-shaped portions on one or both ends of the main battery connector, wherein the bottom of the cup-shaped portion is formed by one metal eyelet, the acid resistant rubber or soft plastics such as thermoplastics thus surrounding the at least one metal eyelet. Furthermore, the battery take-off connector comprises the above discussed lid and a cover which is made of an acid-resisting material and adapted to provide a sealing effect between the cup-shaped portions of the acid resistant rubber or soft plastics such as thermoplastics of the main battery connector and the lid. Both the lid and the cover may be manufactured from a plastic material, thermoplastic elastomer material or rubber or soft plastics or any other material that offers a good seal between the lid and the acid resistant rubber or soft plastics such as thermoplastic elastomers of the main battery connector.

According to an embodiment, the cover is ring-shaped and provided with a hole in its center. Furthermore, wherein the lid is tightly fitted in the hole of the cover and the outer portion of the cover engages with the cup-shaped portion of the acid resistant rubber or soft plastics such as thermoplastics of the main battery connector.

According to an embodiment, the connector is made of a hard plastic material and both the lid and the acid resistant rubber are made from a soft plastic material such as thermoplastic elastomers.

According to an embodiment, the set further comprises a sleeve made of a good sealing material (such as e.g. rubber or soft plastics such as thermoplastic elastomers), wherein the plug contact is hosted inside the sleeve in such a way that the first portion of the plug contact is protruding from the sleeve and engaging the bolt whereas the second portion of the plug contract is fitted through the lid.

According to an embodiment, the cover, the sleeve and the lid are integrally manufactured in one piece, such providing a simplified lid that seals around the mated parts. Material for this simplified lid would be thermoplastic elastomer, or other material which offers a good sealing possibility. Optionally, the simplified lid (one piece) provides an extended circumferential inner wall, deep enough to accommodate an electronic circuitry together with all the parts potted together or over-molded. The outer rim of this simplified lid would seal tight against the rim of the cup-shaped portions of the acid resistant rubber or soft plastics such as thermoplastic elastomers encasing the main battery connector if these elements are clipped together.

According to an embodiment, the set further comprises a light source electrically connected to the plug contact and hosted in the cup-shaped portion of the acid resistant rubber or soft plastics such as thermoplastic elastomers encasing the main battery connector. Moreover, the cover or the lid is made from acid-resistant translucent material, such that any light, originating from the light source (such as a light emitting diode or multicolor light emitting diode, for example) could be seen through the cover respectively lid.

According to an embodiment the plug contact consists of two parts that are mounted together, wherein a first part provides the first portion of the plug contact and a second part provides the second portion of the plug contact. According to an alternative embodiment, the plug contact is integrally formed in one piece.

According to an embodiment, the set further comprises an electronic circuit mounted inside the cup-shaped portion of the acid resistant rubber or soft plastics such as thermoplastic elastomers encasing the main battery connector above the bolt (thus, the bolt is located between the eyelet of the main battery connector and the electronic circuit), the electric circuit being electrically connected to the plug contact. Thus, the electronic circuit is insulated by the cup-shaped portions of the acid resistant rubber or soft plastics such as thermoplastic elastomers and the lid. The electronic circuit can be potted or not and is placed inside the cup-shaped portion of the acid resistant rubber or soft plastics such as thermoplastic elastomers such that it obtains power from the first portion of the plug contact which is inserted into the central drilling of the bolt. According to an embodiment, the electronic circuit comprises a light source which enables a user to monitor, through a translucent lid, the electronic status of the assembly, such as the state of the external accessory - as for example, the electrolyte level of the battery, through a connected external probe, or other information, via the insulated wire attached to the second portion of the plug contact.

According to an embodiment, the set further comprises a sleeve insert which is inserted into the drilling of the bolt for receiving the first portion of the plug contact to make a better sliding connection with improved electrical conductivity.

According to an embodiment, the electronic circuit comprises a thermo-sensor, which protrudes from the electronic circuit in such a way that it makes physical contact with the bolt when all components of the set are in place. The bolt which is tightened into the battery terminal, would conduct the heat from the battery to the thermo-sensor, where the temperature would be monitored by the electronic circuit and any over-temperature would be indicated by the light source.

It is an advantage of the above described solution that it provides for a better electrical connection of the battery take-off connector that is used to take-off current from the battery terminal while affording better physical stability against vibration and other similar mechanical forces.

In the following, embodiments of the present invention are described by referring to the enclosed Figures in which
- Figures 1 to 3: schematically show cross-sectional views of a take-off connection according to the prior art;
- Figures 4 and 5: schematically show a first embodiment of a set consisting of an battery take-off connector, a main battery connector and an electrically conductive bolt in exploded view (figure 4) and cross-sectional view in a mounted state (figure 5);
- Figure 6: schematically shows a cross-sectional view of a second embodiment of the set;
- Figure 7: schematically shows a cross-sectional view of a third embodiment of the set;
- Figure 8: schematically shows a cross-sectional view of a fourth embodiment of the set;
- Figure 9: schematically shows a cross-sectional view of a one piece cover that may be used in the set; and
- Figure 10: schematically shows details of a plug contact that may be used in the set.

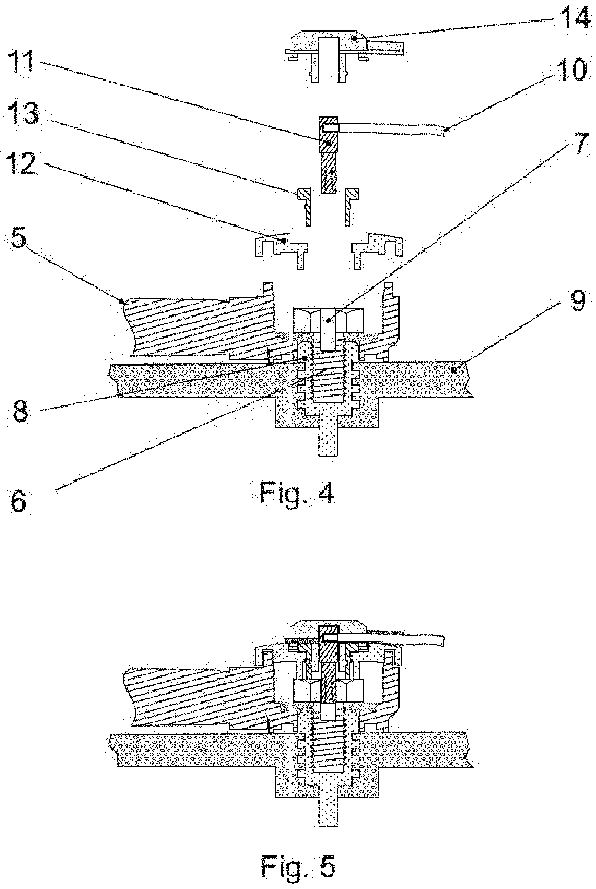

Figure 4 and Figure 5 each show a cross-section of a connection between an inter-cell battery connector (main battery connector) 5 and a battery terminal 8 which is integrated in a battery lid 9. The inter-cell battery connector 5 is manufactured from copper cable that is provided with metal eyelets on both ends and has been fully encased in acid resistant rubber or soft plastics such as thermoplastics. The inter-cell battery connector 5 is referred to as "Perfect Connector" 5 in the following.

Figure 4 shows a split view (exploded view) with all the separate components utilized, while Figure 5 shows an assembled view.

The connection between the Perfect Connector 5 and the battery terminal 8 is tightened by the bolt 6 to the battery terminal 8. Under usual conditions a cup-shaped portion of acid resistant rubber surrounding each metal eyelet of the Perfect Connector 5 is protected by means of a cover 12 and a lid 14. This cover 12 and lid 14 provide a good seal from the outside ambient environment to the inside of the cup-shaped portion of the Perfect Connector 5, thus preventing any corrosion between the conductive part of the Perfect Connector 5 and the battery terminal 8. The lower edge of the Perfect connector 5 presses tightly against the surface of the battery lid 9 and is also fitted tight against the upper part of battery terminal 8. This is the exposed part of the battery terminal above the battery lid 9. The remainder lower part of the same battery terminal is embedded within the construction of the battery lid 9. This tight-fitting assembly between the "Perfect Connector" 5 and the battery terminal 8 also provides a good seal against any possible acid-ingress to the inside of the cup-shaped portion of the Perfect Connector 5, and underneath of the Perfect Connector 5.

The way that the Perfect Connectors 5 are sealed, presents a challenge when it is necessary to take-off a low-current supply from the same battery terminal 8 using an battery take-off connector, without spoiling the sealing effect of the Perfect Connector 5. The present invention, here described, is especially designed to be used wherever these "Perfect Connectors" are involved.

This particular novelty hereby described, actually provides for such a connection in a very simple but effective manner. FIG 5 illustrates how this is achieved.

The cover 12 is provided with a hole in its center, through which the-lid 14 made of soft plastic such as a thermoplastic elastomer or other acid-resistant sealing material such as rubber, is fitted. This lid 14 could also be made of a harder insulating material such as polypropylene, polycarbonate or similar suitable material. A secondary sealing element 13 is additionally used in this assembly. The material of the lid 12 is selected as suitable for providing a seal around its circumference when clipped in place on to the cup-shaped portion of the "Perfect connector" 5. Such material would be soft polypropylene or a suitable thermoplastic elastomer, or similar material.

The bolt 6 which is used to tighten the Perfect Connector 5 to the battery terminal 8 is drilled in its center. This central drilling 7 provides a hole for a plug-in connection to a plug contact 11, which leads the current from the battery terminal 8 through a wire 10 which is electrically connected to the plug contact 11. This wire 10 (which is preferably insulated) can be electrically and physically connected to the plug contact 11 at a second portion (a first portion will be described below) in various ways, such as being soldered, welded or crimped. Any low or even medium current device such as a level sensor or BMS or any other device, can be supplied via the wire 10. This wire 10 if fitted tight inside the lid 14, thus ensuring a good and effective seal between the wire 10 and the lid 14.

The lower part (first portion) of plug contact 11 consists of a part, suitably designed to make good electrical contact with the inner drilling 7 of the bolt 6. This is best achieved by having this part of the plug contact 11 springy in nature, such that it is made in segments which can move radially inwards when inserted in the drilling 7, therefore ensuring that the outer circumferential area of the first portion of plug contact 11 makes a good contact to the inner surface of drilling 7 when the two parts - plug contact 11 and drilling 7 - are paired together.

The plug contact 11 is inserted into the Perfect Connector 5 through the sleeve 13 and the cover 12, thereby ensuring that the lower part (first portion) of the plug contact 11 is guided into the drilling 7 to make a good connection. The upper central round part (second portion) of the body of the plug contact 11 is fitted tight into a recess in lid 14, again ensuring a perfect seal, against any ingress between the plug contact 11, the secondary lid 14 and the cover 12. The latter cover 12, owing to the material that it is made from, such as soft polypropylene, TPE or any other suitable material, that is also battery-acid proof, makes a good tight seal between itself and the circumferential edge of the Perfect Connector 5.

All this provides for a simple but effective and sealed connection, which also makes it very easy in the field to provide such a connection.

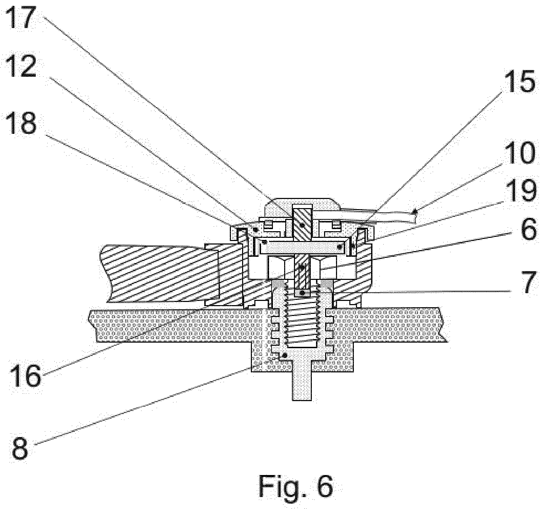

A second embodiment is shown in FIG 6. This shows another novel idea, in which the space available between the bolt 6 and the cover 12 is utilized for housing special circuitry such as an electric circuit board 15. In this case the plug contact 11 consists of two separate parts having a lower half 16 (constituting the first portion of the plug contact) that is completely, physically and electrically separated from the other part 17 (constituting the second portion of the plug contact). The lower part 16 of the plug contact would connect the electric circuit board 15 to the battery terminal 8 via the contact through the drilling 7 in the bolt 6, as in the previous embodiment.

The upper part 17 of the plug contact connects the electric circuit board 15, through the wire 10 to external means. Such means could be battery level probes or any other needed pieces of equipment. A second wire, leading to the electronic circuit 18 on the electric circuit board 15 could also be included in this embodiment.

In the present embodiment, the electric circuit board consists of a printed circuit totally encapsulated or potted in a suitable resin for increased durability and protection. However, this is not mandatory. As an alternative, the electric circuit board could also be housed in a thin-walled container 19, which could be manufactured in transparent insulating material such as polycarbonate, ABS, or any other material providing insulating and transparent properties.

Furthermore, as a means of visually monitoring the electronic status of the whole embodiment, a light source in the form of a light emitting diode l.e.d. 18 is embedded in this circuitry during the potting stage. The status of this l.e.d. which is of the multi-color type in the present case, can be seen through the translucent lid 12, once the whole assembly is put together. In the present embodiment the electric circuit board 15 comprises components required to have the device (such as the Abertax CLS) which measures or detects the electrolyte level within the battery. These components are directly supplied with power via the lower part 16 of the plug contact - all within the cup-shaped enclosure of the Perfect Connector 5.

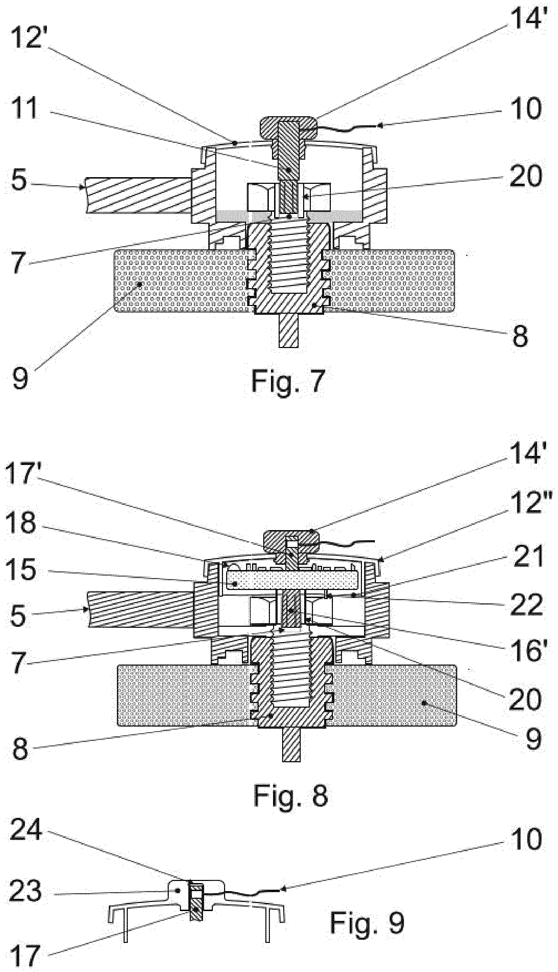

Two further embodiments are shown in Figure 7 and Figure 8:
In these two embodiments, the parts 12, 13, and 14 comprising the cover for the Perfect Connector 5 are simplified whereby the lid 14' is fitted tight inside the cover 12'. A clipping feature as shown can also be provided. The material for lid 14' is a thermoplastic elastomer, which by its very nature provides a good seal when this is tightly fitted into another part, in this case 12', also made of thermoplastic elastomer or another suitable material, which would be easy to manufacture, while at the same time provide good sealing properties. A molded recess in the part 14' houses the second portion of the plug contact 11 together with the wire 10. As an alternative, it is possible to over-mould the second portion of the plug contact 11 and the wire 10 within the lid 14'.

The outer circumferential lip on cover 12' makes a good seal when this cover 12' is pressed in place on the rim of the cup-shaped portion of the Perfect Connector 5.

Figure 8 shows a similar embodiment to Fig 7, however, in this case the idea of having an embedded electronic circuit is included. This electronic circuit 15 is totally encapsulated in a suitable resin 21. This resin 21 could also be over-molded on the electronic components 15, with a suitable medium such as polyurethane or other suitable thermoplastic or resin. For this end, the inner circumferential wall of the cover 12" is extended in depth, to accommodate the necessary height to take the electronic circuitry together with the encapsulating medium 21.

An l.e.d. 18 also embedded together with the electronic board and components, gives an indication of the status of the electronics. In this case the cover 12" is made of translucent material to allow the light emitted from the l.e.d. 18 to be seen through the transparent potting resin or over-injected thermoplastic and through the translucent cover 12" itself. This l.e.d. 18 is of the multi-color type to monitor different status.

One particular example is to monitor the temperature of the battery through its terminal 8 and the bolt 6. Such a temperature sensor 22 can be relatively easily installed directly from the electronic board and placed in contact with the bolt 6 which is tightened on directly to the battery terminal 8, thus, offering a good heat-conductive path for the temperature to be measured.

All metal parts, 16', 17' and 22 could directly form part of the printed circuit board with all the other electronic components. Thus, the plug contact 11 can form part of the electric circuit board. Finally, this is all potted together with the insulating medium 21 as mentioned earlier, thus providing a very suitable assembly for plugging it as one unit to obtain the desired connection from the bolt 6 to any external unit (such as a level-sensor probe, or other), via wire 10. All the electronic circuitry for the correct operation of the whole unit is therefore contained within the Perfect Connector 5.

In the present embodiment, a sleeve insert 20 is inserted into the drilling 7 of the bolt to have a better conductive connection between the first portion 16 or 16' of the plug contact 11 to the bolt 6. However, this insert sleeve is optional, only.

Figure 9, shows the whole cover assembly molded as one piece 23. Here, the cover 12" and lid 14' are molded together to form one whole piece. The wire 10 together with the second portion 17 of the plug contact are inserted through the special molded recess 24. The material chosen for this molding should ideally have good sealing properties and also possible to mould with translucent properties, for reasons already described above. It is also possible to do away with the recess 23 and over-mould the second portion 17 of the plug contact together with the wire 10. A suitable material which can be molded for this purpose would be a thermoplastic elastomer, also chosen for its acid-resisting properties.

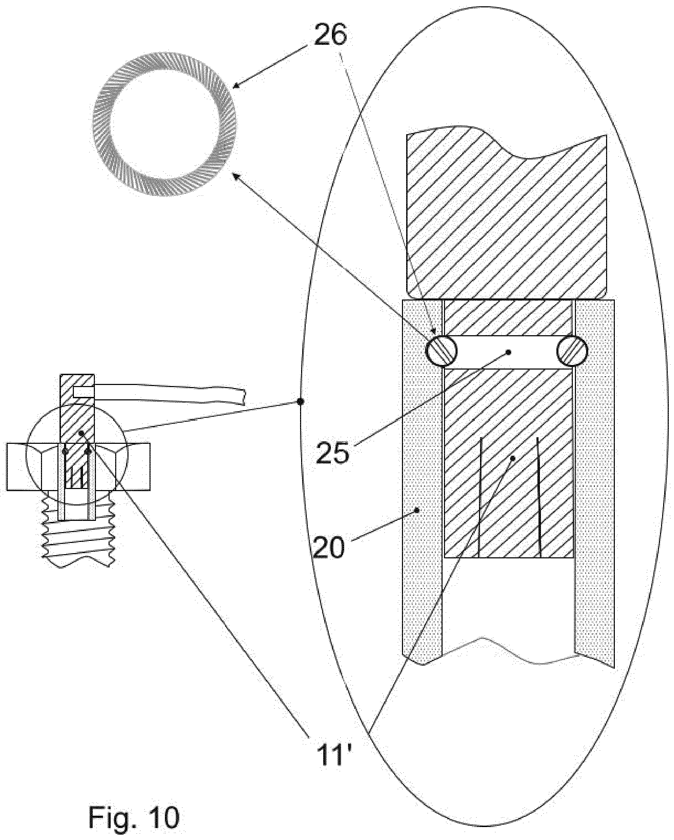

A further embodiment is shown in Figure 10. Figure 10 shows at the left top a top view on a spring and on the right an enlarged cross-sectional view of first and second portions of a plug contact together with part of a sleeve insert 20 for the drilling in the bolt. In this embodiment the sleeve insert 20 or the bolt 6 (if no sleeve insert is used), has a slot machined at a point around the inner surface thereof. A similar groove 25 is machined on the outer surface of the first portion of a modified plug contact 11'.

An electrical-conductive spring 26 is fitted in the groove of the first portion of the modified plug contact 11'. This spring 26 locks in position when the first portion of the modified plug contact 11' is inserted in the hole of the sleeve insert 20. This provides a more stable physical connection against vibrations or other movements, while providing a better electrical connection between the modified plug contact 11' and the bolt 6.

## Claims

1. A set consisting of
an auxiliary battery connector,
a main battery connector (5), and
an electrically conductive bolt (6),
the auxiliary battery connector being capable to take-off current from a battery terminal (8),
the auxiliary battery connector comprising:
a plug contact (11) having two portions, wherein a first portion of the plug contact (11) is adapted to plug to a tool engagement portion (7) of the bolt (6) which is attached to the battery terminal (8); and
an insulated wire (10), the conductor of which is electrically connected to the plug contact (11) at a second portion of the plug contact (11) different from the first portion of the plug contact (11);
the main battery connector (5) being provided with a metal eyelet on at least one end; and
the electrically conductive bolt (6) being adapted to the eyelet of the main battery connector (5);
**characterized in that**
the first and second portion of the plug contact (11) is integrally formed in one piece,
the main battery connector (5) is manufactured from copper cable which is provided with the metal eyelet on at least one end and has been fully encased in acid resistant rubber or thermoplastic elastomers, and
the tool engagement portion (7) of the bolt (6) is drilled in its central axis and the first portion of the plug contact (11) provides a pin contact with circular cross section with elastic contact blades, the pin contact being adapted to enter the drilling in the tool engagement portion (7) of the bolt (6).

2. The set of claim 1, wherein the drilling in the tool engagement portion (7) of the bolt (6) has a circular groove machined on the inner surface of the drilling.

3. The set of claim 1 or 2,
wherein the acid resistant rubber or thermoplastic elastomers encasing the main battery connector (5) provides a cup-shaped portion on at least one end of the main battery connector (5), wherein the bottom of the cup-shaped portion is formed by one metal eyelet, the acid resistant rubber thus surrounding the at least one metal eyelet; and
wherein the auxiliary battery connector further comprises
a lid (14) of insulating material, the lid (14) comprising a recess, the recess being adapted to receive the second portion of the plug contact (11) together with a portion of the insulated wire (10); and
a cover (12) which is made of an acid-resisting material and adapted to provide a sealing effect between the cup-shaped portion of the acid resistant rubber or thermoplastic elastomers of the main battery connector (5) and the lid (4).

4. The set of claim 3,
wherein the cover (12) is ring-shaped and provided with a hole in its center; and wherein the lid (14) is tightly fitted in the hole of the cover (12) and the outer portion of the cover (12) engages with the cup-shaped portion of the acid resistant rubber or thermoplastic elastomers of the main battery connector (5).

5. The set of claim 3 or 4, further comprising a sleeve (13), which is made of a sealing material, wherein the plug contact (11) is hosted inside the sleeve (13) in such a way that the first portion of the plug contact (11) is protruding from the sleeve (13) and engaging the bolt (6) whereas the second portion of the plug contract (11) is fitted through the lid (14).

6. The set of claim 5, wherein the cover (12), the sleeve (13) and the lid (14) are integrally manufactured in one piece (23).

7. The set of claim 6, wherein the piece (23) provides an extended circumferential inner wall, deep enough to accommodate an electronic circuitry.

8. The set of one of claims 3 to 7,
further comprising a light source (18) electrically connected to the plug contact (11) and hosted in the cup-shaped portions of the acid resistant rubber or thermoplastic elastomers encasing the main battery connector (5),
wherein the cover (12) or the lid (14) is made from acid-resistant translucent material.

9. The set of one of claims 3 to 8,
further comprising an electronic circuit (15) mounted inside the cup-shaped portion of the acid resistant rubber or thermoplastic elastomers encasing the main battery connector (5) above the bolt (6), the electric circuit (15) being electrically connected to the plug contact (11).

10. The set of claim 9, wherein the electronic circuit (15) comprises a thermo-sensor (22), which protrudes from the electronic circuit (15) in such a way that it makes physical contact with the bolt (6) when all components of the set are in place.

11. The set of one of claims 3 to 10, further comprising a sleeve insert (20) which is inserted into a drilling (7) of the bolt (6) for receiving the first portion of the plug contact (11).

12. The set of one of claims 1 to 11, wherein the first portion of the plug contact (11) provides a tube-shaped end portion with circular cross section and is provided with a circular groove (25) on its radial surface area, in which an electrical-conductive ring spring (26) is fitted.

## Patentansprüche

1. Set, bestehend aus:
einem Hilfs-Batterieverbinder,
einem Haupt-Batterieverbinder (5) und
einem elektrisch leitenden Schraubbolzen (6),
wobei der Hilfs-Batterieverbinder in der Lage ist, Strom von einem Batterieanschluss (8) zu entnehmen,
wobei der Hilfs-Batterieverbinder aufweist:
einen Steckkontakt (11) mit zwei Abschnitten, wobei ein erster Abschnitt des Steckkontakts (11) dazu ausgebildet ist, an einem Werkzeugeingriffsabschnitt (7) des Schraubbolzens (6), der an dem Batterieanschluss (8) angebracht ist, angesteckt zu sein; und
einen isolierten Draht (10), dessen Leiter an einem von dem ersten Abschnitt des Steckkontakts (11) verschiedenen zweiten Abschnitt des Steckkontakts (11 elektrisch mit dem Steckkontakt (11) verbunden ist;
wobei der Haupt-Batterieverbinder (5) an wenigstens einem Ende mit einer Metallöse versehen ist; und
wobei der elektrisch leitende Schraubbolzen (6) an der Öse des Haupt-Batterieverbinders (5) ausgebildet ist;
**dadurch gekennzeichnet, dass**
der erste und der zweite Abschnitt des Steckkontakts (11) integral in einem Stück ausgebildet sind,
der Haupt-Batterieverbinder (5) aus einem Kupferkabel hergestellt ist, das an wenigstens einem Ende mit der Metallöse versehen ist und vollständig mit säurebeständigem Gummi oder thermoplastischen Elastomeren umhüllt ist, und der Werkzeugeingriffsabschnitt (7) des Schraubbolzens (6) an seiner Mittelachse angebohrt ist und der erste Abschnitt des Steckkontakts (11) einen Stiftkontakt mit kreisförmigem Querschnitt mit elastischen Kontaktblättern bereitstellt, wobei der Stiftkontakt dazu ausgebildet ist, in die Bohrung in dem Werkzeugeingriffsabschnitt (7) des Schraubbolzens (6) einzudringen.

2. Set nach Anspruch 1, wobei die Bohrung in dem Werkzeugeingriffsabschnitt (7) des Schraubbolzens (6) eine kreisförmige Nut aufweist, die an der Innenfläche der Bohrung eingearbeitet ist.

3. Set nach Anspruch 1 oder 2,
wobei der säurebeständige Gummi oder die thermoplastischen Elastomere, die den Haupt-Batterieverbinder (5) umhüllen, an wenigstens einem Ende des Haupt-Batterieverbinders (5) einen becherförmigen Abschnitt bereitstellen, wobei der Boden des becherförmigen Abschnitts durch eine Metallöse gebildet ist, wobei der säurebeständige Gummi somit die wenigstens eine Metallöse umgibt; und
wobei der Hilfs-Batterieverbinder ferner aufweist:
einen Deckel (14) aus Isoliermaterial, wobei der Deckel (14) eine Aussparung aufweist, wobei die Aussparung dazu ausgebildet ist, den zweiten Abschnitt des Steckkontakts (11) zusammen mit einem Abschnitt des isolierten Drahts (10) aufzunehmen; und
eine Abdeckung (12), die aus einem säurebeständigen Material hergestellt ist und dazu ausgebildet ist, eine Dichtungswirkung zwischen dem becherförmigen Abschnitt des säurebeständigen Gummis oder der thermoplastischen Elastomere des Haupt-Batterieverbinders (5) und dem Deckel (4) bereitzustellen.

4. Set nach Anspruch 3,
wobei die Abdeckung (12) ringförmig ist und in ihrer Mitte mit einem Loch versehen ist; und
wobei der Deckel (14) fest in das Loch der Abdeckung (12) eingepasst ist und der äußere Abschnitt der Abdeckung (12) mit dem becherförmigen Abschnitt des säurebeständigen Gummis oder der thermoplastischen Elastomere des Haupt-Batterieverbinders (5) in Eingriff steht.

5. Set nach Anspruch 3 oder 4, ferner aufweisend eine Hülse (13), die aus einem Dichtungsmaterial hergestellt ist, wobei der Steckkontakt (11) derart in der Hülse (13) aufgenommen ist, dass der erste Abschnitt des Steckkontakts (11) von der Hülse (13) vorsteht und mit dem Schraubbolzen (6) in Eingriff steht, während der zweite Abschnitt des Steckkontakts (11) durch den Deckel (14) geführt ist.

6. Set nach Anspruch 5, wobei die Abdeckung (12), die Hülse (13) und der Deckel (14) integral in einem Stück (23) hergestellt sind.

7. Set nach Anspruch 6, wobei das Stück (23) eine verlängerte umlaufende Innenwand bereitstellt, die tief genug ist, um eine elektronische Schaltung aufzunehmen.

8. Set nach einem der Ansprüche 3 bis 7,
ferner aufweisend eine Lichtquelle (18), die elektrisch mit dem Steckkontakt (11) verbunden ist und in den becherförmigen Abschnitten des säurebeständigen Gummis oder der thermoplastischen Elastomere, die den Haupt-Batterieverbinder (5) umhüllen, untergebracht ist,
wobei die Abdeckung (12) oder der Deckel (14) aus säurebeständigem lichtdurchlässigem Material hergestellt ist.

9. Set nach einem der Ansprüche 3 bis 8,
ferner aufweisend eine elektronische Schaltung (15), die oberhalb des Schraubbolzens (6) innerhalb des becherförmigen Abschnitts des säurebeständigen Gummis oder der thermoplastischen Elastomere, die den Haupt-Batterieverbinder (5) umhüllen, angebracht ist, wobei die elektrische Schaltung (15) elektrisch mit dem Steckkontakt (11) verbunden ist.

10. Set nach Anspruch 9, wobei die elektronische Schaltung (15) einen Thermosensor (22) aufweist, der derart von der elektronischen Schaltung (15) vorsteht, dass er physischen Kontakt mit dem Schraubbolzen (6) herstellt, wenn alle Komponenten des Sets an Ort und Stelle sind.

11. Set nach einem der Ansprüche 3 bis 10, ferner aufweisend einen Hülseneinsatz (20), der in eine Bohrung (7) des Schraubbolzens (6) eingesetzt ist, um den ersten Abschnitt des Steckkontakts (11) aufzunehmen.

12. Set nach einem der Ansprüche 1 bis 11, wobei der erste Abschnitt des Steckkontakts (11) einen rohrförmigen Endabschnitt mit kreisförmigem Querschnitt bereitstellt und an seinem radialen Oberflächenbereich mit einer kreisförmigen Nut (25) versehen ist, in die eine elektrisch leitende Ringfeder (26) eingesetzt ist.

## Revendications

1. Ensemble composé
d'un connecteur de batterie auxiliaire,
d'un connecteur de batterie principale (5), et
un boulon électriquement conducteur (6),
le connecteur de batterie auxiliaire pouvant prendre du courant à partir d'une borne de batterie (8),
le connecteur de batterie auxiliaire comprenant :
un contact à fiche (11) ayant deux parties, dans lequel une première partie du contact à fiche (11) est adaptée à se brancher sur une partie de mise en prise d'outil (7) du boulon (6) qui est attaché à la borne de batterie (8) ; et
un fil isolé (10) dont le conducteur est connecté électriquement au contact à fiche (11) au niveau d'une seconde partie du contact à fiche (11) différente de la première partie du contact à fiche (11) ;
le connecteur de batterie principale (5) étant pourvu d'un œillet métallique sur au moins une extrémité ; et
le boulon électriquement conducteur (6) est adapté à l'œillet du connecteur de batterie principale (5) ;
**caractérisé en ce que**
la première et la seconde partie du contact à fiche (11) sont formées d'une seule pièce,
le connecteur de batterie principale (5) est fabriqué à partir d'un câble en cuivre pourvu d'un œillet métallique sur au moins une extrémité et entièrement enveloppé de caoutchouc résistant aux acides ou d'élastomères thermoplastiques, et
la partie de mise en prise d'outil (7) du boulon (6) est percée dans son axe central et la première partie du contact à fiche (11) fournit un contact à broche à section transversale circulaire avec des lames de contact élastiques, le contact à broche étant adapté à entrer dans le perçage dans la partie de mise en prise d'outil (7) du boulon (6).

2. Ensemble selon la revendication 1, dans lequel le perçage dans la partie de mise en prise d'outil (7) du boulon (6) a une rainure circulaire usinée sur la surface intérieure du perçage.

3. Ensemble selon la revendication 1 ou 2,
dans lequel le caoutchouc résistant aux acides ou les élastomères thermoplastiques qui enveloppent le connecteur de batterie principale (5) fournissent une partie en forme de coupelle à au moins une extrémité du connecteur de batterie principale (5), dans lequel le fond de la partie en forme de coupelle est formé par un œillet métallique, le caoutchouc résistant aux acides entourant ainsi l'au moins un œillet métallique ; et
dans lequel le connecteur de batterie auxiliaire comprend en outre
une coiffe (14) en matériau isolant, la coiffe (14) comprenant un renfoncement, le renfoncement étant adapté à recevoir la seconde partie du contact à fiche (11) ainsi qu'une partie du fil isolé (10) ; et
un couvercle (12) constitué d'un matériau résistant aux acides et adapté à fournir un effet étanche entre la partie en forme de coupelle du caoutchouc résistant aux acides ou des élastomères thermoplastiques du connecteur de batterie principale (5) et la coiffe (4).

4. Ensemble selon la revendication 3,
dans lequel le couvercle (12) est en forme d'anneau et pourvu d'un trou en son centre ; et
dans lequel la coiffe (14) est ajustée étroitement dans le trou du couvercle (12) et la partie extérieure du couvercle (12) vient en prise avec la partie en forme de coupelle du caoutchouc résistant aux acides ou des élastomères thermoplastiques du connecteur de batterie principale (5).

5. Ensemble selon la revendication 3 ou 4, comprenant en outre un manchon (13), qui est constitué d'un matériau d'étanchéité, dans lequel le contact à fiche (11) est logé à l'intérieur du manchon (13) de telle sorte que la première partie du contact à fiche (11) fait saillie du manchon (13) et vient en prise dans le boulon (6), tandis que la seconde partie du contact à fiche (11) est insérée à travers la coiffe (14).

6. Ensemble selon la revendication 5, dans lequel le couvercle (12), le manchon (13) et la coiffe (14) sont fabriqués d'une seule pièce (23).

7. Ensemble selon la revendication 6, dans lequel la pièce (23) fournit une paroi intérieure circonférentielle étendue, suffisamment profonde pour accueillir une circuiterie électronique.

8. Ensemble selon l'une des revendications 3 à 7,
comprenant en outre une source lumineuse (18) connectée électriquement au contact à fiche (11) et logée dans les parties en forme de coupelle du caoutchouc résistant aux acides ou des élastomères thermoplastiques enveloppant le connecteur de batterie principale (5),
dans lequel le couvercle (12) ou la coiffe (14) est constitué à partir d'un matériau translucide résistant aux acides.

9. Ensemble selon l'une des revendications 3 à 8,
comprenant en outre un circuit électronique (15) monté à l'intérieur de la partie en forme de coupelle du caoutchouc résistant aux acides ou des élastomères thermoplastiques enveloppant le connecteur de batterie principale (5) au-dessus du boulon (6), le circuit électrique (15) étant connecté électriquement au contact à fiche (11).

10. Ensemble selon la revendication 9, dans lequel le circuit électronique (15) comprend un thermocapteur (22) qui fait saillie du circuit électronique (15) de telle sorte qu'il entre en contact physique avec le boulon (6) lorsque tous les composants de l'ensemble sont en place.

11. Ensemble selon l'une des revendications 3 à 10, comprenant en outre un insert de manchon (20) qui est inséré dans un perçage (7) du boulon (6) pour recevoir la première partie du contact à fiche (11).

12. Ensemble selon l'une des revendications 1 à 11, dans lequel la première partie du contact à fiche (11) fournit une partie d'extrémité en forme de tube avec une section transversale circulaire et est pourvue d'une rainure circulaire (25) sur sa surface radiale, dans laquelle un ressort annulaire électriquement conducteur (26) est monté.
